Europäisches Patentamt

European Patent Office

Office européen des brevets

(11) Publication number : **0 467 645 A1**

# (12) EUROPEAN PATENT APPLICATION

(21) Application number : **91306440.8**

(51) Int. Cl.$^5$ : **B60J 1/17**

(22) Date of filing : **16.07.91**

(30) Priority : **16.07.90 US 554013**

(43) Date of publication of application :
**22.01.92 Bulletin 92/04**

(84) Designated Contracting States :
**DE ES FR GB IT SE**

(71) Applicant : **DONNELLY CORPORATION**
**414 East Fortieth Street**
**Holland Michigan 49423 (US)**

(72) Inventor : **Kane, Edmund J.**
**3890 Vermae Dr.**
**Holland, Michigan 49424 (US)**
Inventor : **Herrmann, Robert S.**
**15013 Robinwood Ct**
**Grand Haven, Michigan 49417 (US)**

(74) Representative : **Sheard, Andrew Gregory et al**
**Kilburn & Strode 30, John Street**
**London WC1N 2DD (GB)**

(54) **Panel and bracket assembly and method for making same.**

(57) A panel assembly is disclosed for use as a window in vehicles or other structures where the window is raised and lowered, usually by sliding movement via a scissor linkage or other mechanism. The assembly includes a sheet of material (12) (e.g. glass), a gasket (14) or casing portion attached along one peripheral edge portion (13) of the sheet (12), and a bracket (20) slidably mounted on the gasket (14). The gasket (14), which is typically moulded from polymeric material, includes one or more retainers for holding the bracket (20) on the gasket (14) without requiring fasteners to extend into or through the sheet (12). A method for slidably mounting the bracket (20) on the gasket (14) after attachment of the gasket (14) to the sheet (12) is also disclosed. The sheet (12) may be transparent or nontransparent glass, polymeric plastic or other suitable material.

EP 0 467 645 A1

FIG. 1

This invention relates to panel assemblies having brackets or other structures secured thereto and, more particularly, to a window panel assembly adapted for use in vehicles or other structures where the window is raised and lowered, usually by sliding movement, such as by means of a window regulator connected to the bracket.

In a vehicle, two or more side window panels are provided adjacent the driver and passenger which may be raised and lowered, typically by sliding movement, via hand-operated or electrical mechanisms. The window panel assemblies are mounted in tracks or channels and are generally moved vertically. It is common to provide a bracket along the bottom edge of the window which allows for the attachment of a scissor linkage, gear driven regulator mechanism, tape or cable drive system to move the window when desired. The brackets typically provide a channel for receipt of rollers or other connections to the mechanisms and are preferably rigidly secured to the window panel in one of various known methods.

One of the prior known window bracket attachment methods is to fit a channel-type bracket over a casing on a peripheral edge of a window panel. The assembly has previously been drilled to provide apertures entirely through the window glass and casing. Appropriate screws or other fasteners are inserted through the bracket, casing and the window glass to hold the bracket in position. Not only does such method require drilling or boring of the window glass which often results in glass breakage and increased waste due to rejection of the assembly, but the fasteners can loosen after repeated usage causing rattles and sloppy operation for the window over the lifetime of the vehicle.

Other methods for attaching regulator mechanisms to vehicle windows have included the provision of precast or premoulded gasket portions or sash plates having integral attachment areas or channels therein which are secured to a window edge after their moulding. One such sash plate is shown in U.S. Patent No. 4,561,211 to Raley et al which includes an integral channel for receiving the roller of a regulator mechanism but does not require a separate bracket other than the sash plate secured to the window itself. The separate sash plate must be secured either by appropriate adhesives or mechanical fasteners and can loosen and result in the same problems described above for the brackets applied with fasteners through bored or drilled holes in the glass.

Yet another method is shown and described in U.S. Patent No. 4,662,113 to Weaver wherein a metal channel-type bracket and a glass window sheet are simultaneously inserted within a mould cavity followed by injection of polymeric moulding material between the bracket and glass and around various edges of the window such that the material, when cured, adheres the bracket to the glass. This assembly requires a complex mould in which the bracket is precisely positioned around portions of the sheet glass edge followed by injection moulding fully throughout the mould cavity between the bracket and glass, typically using reaction injection moulded polyurethane materials, followed by appropriate curing. Special seals have to be provided to obtain the desired gasket shape. If the bond between the glass and moulding material or between the bracket and moulding material is less than secure, failure of the resulting assembly during operation may result.

There is therefore a need for a window panel assembly having a bracket that may be reliably and easily secured to a window to allow attachment of a window regulator mechanism both for vehicles and other structures, as well as a method for making such a panel assembly which may allow simple attachment of the bracket over an edge of a window without requiring fasteners to extend into or through the window and which may be able to provide secure and stable operation over the lifetime of the window.

According to a first aspect of the present invention there is provided a panel assembly (such as a window assembly) comprising:

a panel (or a sheet of material, the terms can be used interchangeably);

a peripheral gasket (such as formed with a polymeric material (extending along at least a portion of one edge of the panel);

a bracket mounted on the gasket, the bracket having receiving means for receiving at least a portion of the gasket and at least a portion of the panel;

the gasket and bracket having means for slidably mounting the receiving means onto the gasket once the gasket has been attached to the panel; and

the gasket having retaining means which engage with the receiving means to secure the bracket on the gasket and thus to the panel.

The receiving means may comprise an interior chamber for receiving at least a portion of the gasket, there being an elongate opening to the chamber through which the gasket and panel extend, the elongate opening being narrower than at least a portion of the chamber whereby the gasket is prevented from passing through the opening to resist removal of the bracket from the panel.

The means for slidably mounting the receiving means may additionally include an opening at one end of the receiving means and communicating with the chamber, the chamber being defined by a pair of sidewalls and a bottom wall opposite the elongated opening, at least one of the sidewalls sloping inwardly towards the elongate opening from the bottom wall.

The retaining means may comprise an elongate wedge-shaped gasket portion. In addition, the retaining means may preferably comprise at least one rib extending along the wedge-shaped gasket portion which engages with the receiving means.

The bracket may be provided with a depression adapted to engage a rib to assist retention of the bracket on the gasket. The retaining means may additionally comprise projecting means on the gasket for engaging an edge of the receiving means to resist or prevent sliding removal of the bracket.

Suitably the projecting means comprises a flexible detent adapted to flex and/or compress when the receiving means is slid thereover, and to return to its original position after passage of the receiving means, the detent including an inclined lead-in surface to facilitate mounting of the receiving means onto the gasket.

The projecting means suitably also includes a second detent adapted to engage and locate another edge of the receiving means to position the receiving means on, and resist sliding removal from, thhe gasket.

In another embodiment the retaining means may comprise a pair of ribs spaced apart from one another on a wedge-shaped gasket portion so that it engages the receiving means. The bracket may be provided with a depression which is adapted to engage the gasket between the ribs. This may help retain the bracket on the gasket. Suitably the ribs extend along the wedge-shaped gasket portion for substantially the entire length of the receiving means. The ribs may be segmented into a series of longitudinally aligned rib segments. These rib segments may be staggered with respect to other rib segments (such as on another side of the ribs). Preferably each of the rib segments include an inclined lead-in surface to facilitate slidable mounting of the receiving means on the gasket.

In a further embodiment the retaining means comprise a plurality of spaced apart projections which extend outwardly from the wedge-shaped gasket portion and are capable of engaging the receiving means. The bracket may be provided with a depression which is adapted to engage the gasket between the spaced projections. This may help retain the bracket on the gasket. The depression can be an elongate'recess, a plurality of elongate recesses, or a plurality of spherical recesses.

Suitably such projections have a rounded, outwardly curved surface so as to facilitate slidable mounting of the receiving means thereover. Such projections may be aligned in pairs along the wedge-shaped gasket portion. The projections may be staggered along the wedge-shaped gasket portion which may preferably include at least one substantially planar, sloping side surface which engages an inside surface of the chamber.

The retaining means may include at least one flexible detent which is adapted to flex and/or compress when channel means is slid thereover and return to its original size after passage of the receiving means. The flexible detent may be located on an outer peripheral surface of the gasket portion and may include an inclined lead-in surface to facilitate mounting of the receiving means on the gasket. A second detent may be provided which is adapted to engage and locate another edge of the receiving means to position the receiving means on, and resist sliding removal from, the gasket. A second detent may also be located on an outer peripheral surface of the gasket portion.

The retaining means may include at least one projection extending outwardly from the gasket. The receiving means may include a channel having an opening therethrough receiving one or more projections when the channel of the receiving means is slidably mounted thereover. Thus, the receiving means may include an interior chamber for receiving a gasket and an elongate opening to the chamber through which the gasket and sheet of material may extend. The receiving means may thus have a pair of generally parallel sidewalls defining the elongate opening and a bottom wall, so that the gasket is adapted to be slid into the interior chamber throough the elongate opening. Thus the means for slidably mounting and the receiving means may include an opening at one end of the receiving means communicating with a chamber within the receiving means.

The sheet of material (or panel) is suitably made of a (substantially) transparent material. The panel will generally be flat, although it may be curved or arcuate depending on the nature of the panel assembly (such as for vehicle doors). The panel sheet material may be made of glass or a plastics material (such as perspex) or a combination of both (such as a laminate).

The bracket may include mounting means for raising and lowering the window (or panel), when the panel is slidably mounted within a vehicle or other structure.

Such mounting means may include a channel on the bracket, wherein the channel is adapted to receive rollers from a scissor-type linkage which may be mounted in a vehicle body portion (such as a vehicle door).

The panel assembly may be provided with at least one additional gasket portion on another peripheral edge of the panel (or sheet material). Such additional gasket portion may be spaced from the peripheral gasket and adapted to guide the raising and lowering of the panel. The gasket may have a thickened portion which is adhered to the panel (e.g. glass) outside of the receiving means to facilitate retention of the gasket on an edge of the panel. The gasket may include at least one additional portion extending outside the receiving means for connection to at least one runner for a moulding material within a moulding apparatus.

The invention also relates to a panel assembly comprising:

a panel;

a peripherall gasket extending along at least a portion of one edge of the panel;

a bracket mounted on the gasket, the bracket having receiving means (or channel means) for receiving at least a portion of the gasket and at least a portion of one edge of the panel; and

the gasket having a thickened portion which is adhered to the panel outside of the receiving means to facilitate retention of the gasket on one edge of the panel.

The receiving means (or channel means) may thus include an interior chamber for receiving the gasket and an elongate opening to the chamber through which the gasket and panel extend. The channel means may have a pair of sidewalls defining the elongate opening and a bottom wall. The gasket can be adapted to be slid into the interior chamber through the elongate opening.

It will thus be appreciated that the gasket can be provided with (or indeed made or formed with) the retaining means. The retaining means may be protrusions, projections, detents or ribs, all of which may extend from a gasket surface. Alternatively, the retaining means may be a wedge-shaped portion. The retaining means will thus engage with the receiving means provided on the bracket. The receiving means may be apertures, holes, recesses or grooves.

Thus in its broadest aspect the retaining means and receiving means will have, once the panel assembly has been assembled, (manually) engaged surfaces which are angled away from the plane of the panel. This will thus resist or prevent movement of the bracket away from (and in the plane of) the panel.

Thus it will be realised that the preferred retaining means (such as protrusions, projections, detents and ribs) may be interchanged with the preferred receiving means (such as grooves, recesses, apertures and holes). Indeed, the invention may employ any retaining means and receiving means that have engageable surfaces (such as a latch or fastening means) that enable the bracket to be fitted over, and thereby secured on, the gasket. The bracket may therefore be resiliently deformable to enable this to be achieved, for example of the bracket and gasket are a snap-fit.

In this specification where it is stated that the bracket is slidably mounted on the gasket, this may mean that the sliding motion is in the plane of the panel (or sheet material). The sliding motion may be perpendicular to the direction of the extending gasket, but is preferably substantially along the direction in which the gasket (and-usually the retaining means) extends.

The present invention thus provides a panel assembly including a separately mounted bracket especially adapted for use in vehicles or other structures where the panel (e.g. a window) which can be raised and/or lowered, typically by sliding movement, such as via one of several types of regulator mechanisms (such as a scissors linkage or the like) which is connected to the bracket.

The invention encompasses a panel assembly comprising a sheet of material, which may be transparent if the assembly is a window assembly, a peripheral gasket (e.g. formed from a plastic or polymeric material) extending along one edge of the sheet, and a bracket mounted on the gasket. The bracket includes receiving means for receiving a portion of the gasket and the edge of the sheet. In addition, the gasket and bracket may include means for slidably mounting the receiving means thereover after the gasket is attached to the sheet (or has been formed on the sheet). Further, the gasket may include retaining means that engage the receiving means for holding the bracket on the gasket, and thus also on the sheet. This arrangement can obviate requiring fasteners to extend into or through the sheet.

In preferred forms of the invention, the retaining means on the gasket may comprise an elongate, wedge-shaped gasket portion. This can be received within a channel-shaped chamber provided in the bracket which is defined by a pair of sidewalls and a bottom wall, the bottom wall being opposite to an elongate opening which is narrower than the (e.g. widest part) of the wedge-shaped gasket portion. This serves to hold the bracket on the assembly.

In other forms, the retaining means may comprise at least one rib, (or a plurality of spaced apart projections which extend outwardly from the wedge-shaped gasket portion) extending along the wedge-shaped gasket portion capable of engaging the receiving means. The ribs and/or projections may be either aligned or staggered. The bracket may be provided with one or more recesses or depressions adjacent the ribs and/or projections to help retain the bracket on the gasket.

In order to locate and help retain the bracket on the gasket, a flexible/compressible detent may be included on the gasket to flex or compress when the bracket is slid thereover and return to its original position after passage of the receiving means (of the bracket) to resist removal of the bracket. A second detent may be included to position the bracket and also resist sliding removal of the bracket. At least one of the detents may include an inclined lead-in surface to facilitate mounting of the bracket.

When the panel assembly is a window assembly, the bracket may include means for assisting in raising and lowering the window assembly when the window is slidably mounted within a vehicle or other structure. Thus the assembly can be provided with panel movement means.

The gasket may have a thickened portion adhered to the glass outside of the bracket to facilitate retention of the gasket on the sheet.

A second aspect of the present invention relates to a method of manufacturing a panel assembly, the method comprising:

providing a panel;

attaching a gasket to at least a portion of one edge of the panel; and

sliding a bracket over the gasket until retaining means on the gasket engage with the receiving means on the bracket to secure the bracket onto the gasket. The method may additionally include forming the gasket (such as from a polymeric material, for example by curing).

The bracket may be slid onto the gasket until the bracket is located and positioned thereon by a projecting portion on the gasket.

The bracket may be provided with a channel having an interior chamber for receiving the gasket, and an elongate opening (to the chamber) through which the gasket and sheet can extend. There may be an opening at one end of the chamber and the bracket may be slid onto the gasket through this opening.

The gasket may be attached to the sheet by moulding with a polymeric moulding material, the gasket being adhered to and bonded to the panel (or sheet) by forming and curing the gasket within a mould apparatus.

A third aspect of the present invention relates to a vehicle comprising a panel assembly of the first aspect which may be made according to a method according to the second aspect.

Preferred features and characteristics of the second and third aspects of the present invention are as for the first mutatis mutandis.

The second aspect of the invention thus encompasses a method of making a panel assembly, such as for slidable mounting in a vehicle or other structure, the method comprising:

providing a sheet of material;

attaching a gasket along at least a portion of one edge of the sheet; and

sliding a bracket over the gasket until retaining means on the gasket engage and hold the bracket in position on a portion of the gasket. In this method, the bracket may be slid onto the gasket either through an end opening or by means of the elongated opening through which the glass sheet and gasket extend after assembly.

Preferably, the gasket is formed on the sheet by moulding with a plastic or polymeric molding material such as reaction injection moulded polyurethane, the gasket being adhered and bonded to the sheet by forming and curing within a mould apparatus. Once this has occurred the bracket can then be slidably mounted on the gasket.

There are numerous advantages over the prior known panel assemblies and assembly methods that may be provided by the present invention. These may include secure, reliable attachment of a gasket to a sheet followed by efficient assembly of a bracket without the need to provide fasteners extending into or through the sheet. This is especially useful where the panel is a glass window since drilling through the window, and consequent breakage and waste, are avoided. As a result, the rejection rate for assemblies including brackets mounted in accordance with the present invention is considerably reduced due to the elimination of any need to pierce the sheeting. In addition, the bracket can be quickly and efficiently mounted on the gasket and may provide a simple yet reliable mechanical structure to hold the bracket in place after assembly. Overall, the assembly may be provided in various forms as windows to fit various vehicles or other structures and can accommodate varying types of window regulator mechanisms including scissors-type linkages or the like.

The invention will now be described, by way of example, with reference to the accompanying drawings, in which:

Figure 1 is a perspective view from the front and to one side of a panel assembly in a first embodiment of the present invention incorporating a bracket adapted to receive a scissor-type regulator mechanism for raising and lowering a window and showing tracks that guide a sliding movement of the window panel assembly;

Figure 2 is a perspective plan view of the panel assembly of Figure 1 illustrating a portion of a suitable mould apparatus that can be used to form gasket portions on the window (e.g. a transparent sheet material) prior to mounting the bracket;

Figure 3 is an enlarged and fragmentary perspective plan view of a bottom portion of the panel assembly shown in Figure 2;

Figure 4 is a section of the panel assembly of Figure 3 taken along plane IV-IV;

Figure 5 is a section of the panel assembly of Figure 3 taken along plane V-V and showing a roller from a scissor-type window regulator mechanism;

Figure 5A, 5B and 5C are three fragmentary perspective side views of three different brackets that can be used in the panel assembly of the present invention;

Fig. 5D is a section of any or all three of the brackets in Figures 5A, 5B and 5C taken along line VD-VD;

Figure 6 is a fragmentary and enlarged perspective side view of area VI of Figure 3 showing one of a number of retaining projections on the panel assembly;

Figure 7 is a fragmentary and enlarged perspective side view of area VII of Figure 3 showing another of one of a number of retaining projections on the panel assembly;

Figure 8A is a section of the panel assembly of Figure 3 taken along plane VIIIA-VIIIA;

Figure 8B is a section of the panel assembly of Figure 3 taken along plane VIIIB-VIIIB;

Figure 9 is a fragmentary perspective side view of a second embodiment of a panel assembly of the present invention having a different gasket;

Figure 10 is a section of Figure 9 taken along plane X-X;

Figure 11 is a fragmentary perspective side view of a third embodiment of the panel assembly of the present invention illustrating a third form of the gasket;

Figure 12 is a fragmentary view from below of the gasket shown in Figure 11;

Figure 13 is a section of the panel assembly of Figure 11 taken along plane XIII-XIII;

Figure 14 is a fragmentary perspective side view of a fourth embodiment of the panel assembly of the present invention illustrating a fourth form of the gasket;

Figure 15 is a view from below of the panel assembly of Figure 14;

Figure 16 is a section of the panel assembly of Figure 14 taken along plane XVI-XVI;

Figure 17 is a fragmentary perspective side view of a fifth embodiment of the panel assembly of the present invention illustrating yet form of the gasket;

Figure 18 is a fragmentary view from below of the window panel assembly of Figure 17;

Figure 19 is a section of the panel assembly of Figure 17 taken along plane XIX-XIX;

Figure 20 is a fragmentary perspective side view of a sixth embodiment of the panel assembly of the present invention showing a bracket fitted over a gasket at the bottom of the window panel

Figure 21 is a fragmentary and enlarged side view (with portions broken away) of the panel assembly of Figure 20; and

Figure 22 is a section of the panel assembly of Figure 21 taken along plane XXII-XXII.

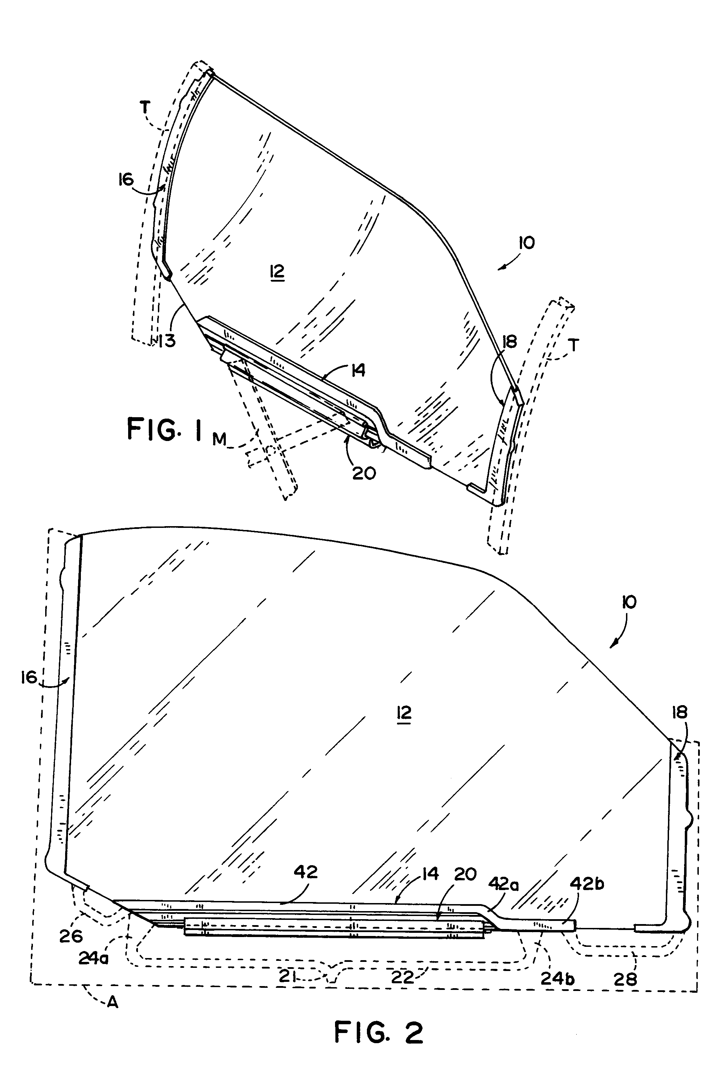

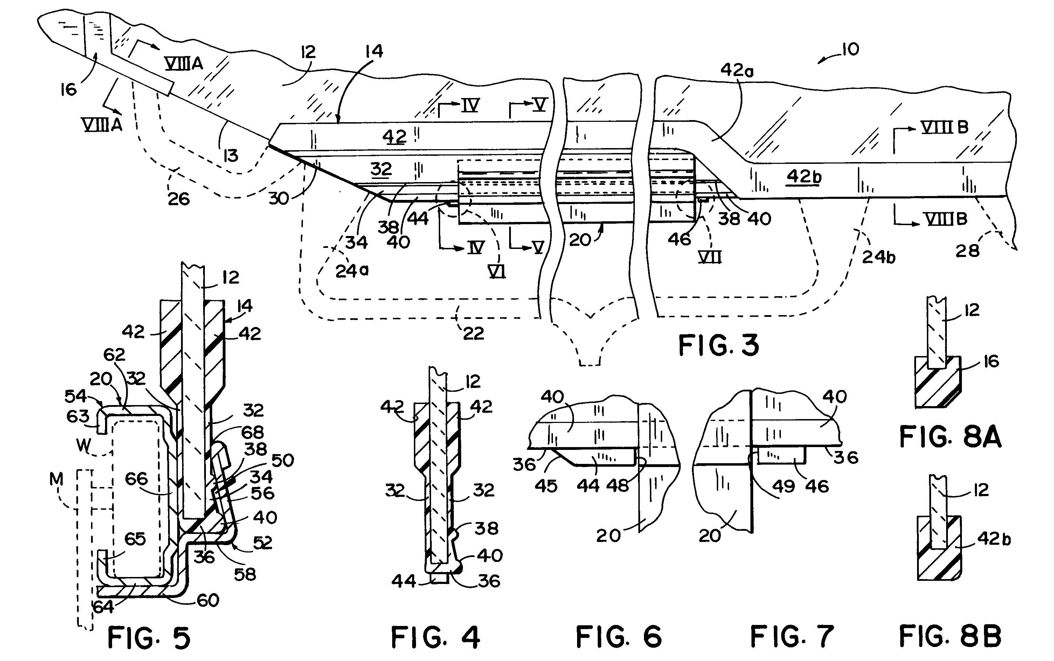

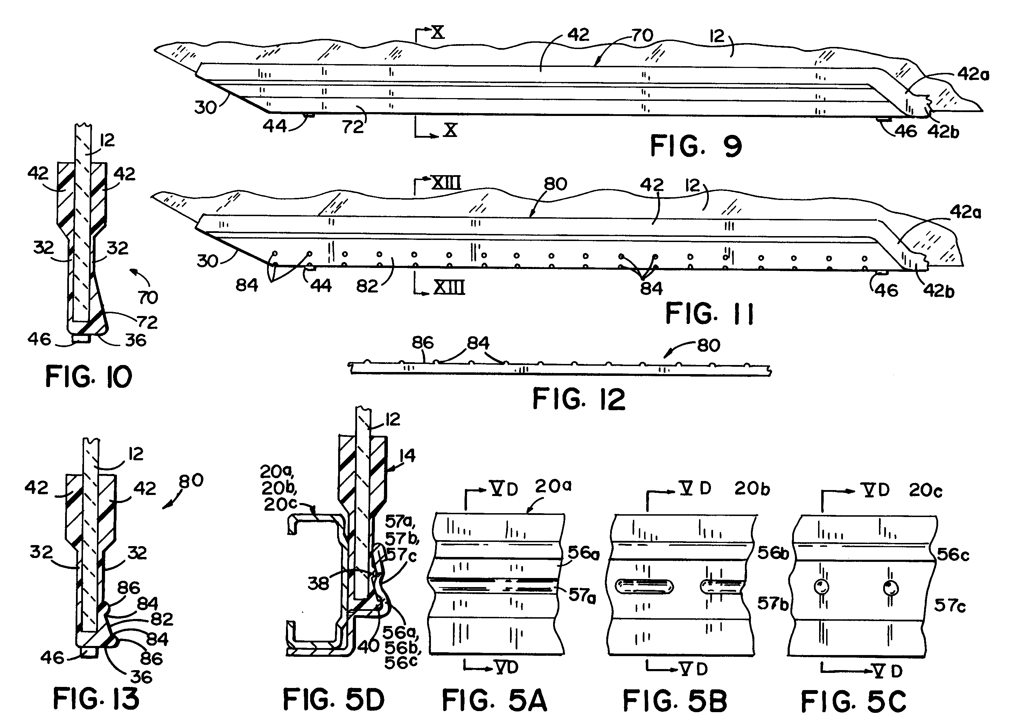

Referring to the drawings in greater detail, Figures 1 and 2 illustrate a first embodiment of a panel assembly 10 of the present invention. The assembly 10 is especially adapted for use as a vehicle window and includes a configured, curved sheet of transparent glass 12 (or window) which may be tempered, laminated or otherwise strengthened in accordance with conventional principles and has three spaced apart peripheral edge gaskets or casings 14, 16 and 18. The gaskets 14, 16 and 18 are usually formed in a moulding apparatus (into which the sheet 12 is inserted) from a plastic or polymeric moulding material, preferably reaction injected moulded polyurethane or polyvinyl chloride polymeric materials of sufficient strength, rigidity and hardness. Gasket 14 is adapted to slidingly receive thereover a channel-type bracket 20 which is retained in position by portions of the gasket, after assembly, that will be further explained later. Simultaneously with the formation of the gasket portion 14, separate, spaced apart gaskets 16, 18 may also be formed on other peripheral edges of the sheet 12 such as the vertical rear edge (of the window) and the vertical forward edge (of the window) respectively. Rear and front edge gaskets 16 and 18 are adapted to be received in tracks or channels T shown by broken lines in Figure 1 which are usually fitted in the doors of a vehicle to guide the substantially vertical movement of the window assembly. In addition, bracket 20 is adapted to receive rollers from a scissor-type regulator or raising and lowering mechanism M as also shown in broken lines (see Figures 1 and 5).

With reference to Figures 2 and 3, the lower half of a suitable mould apparatus A is shown in broken lines and includes representative runners or channels through which a mould material (such as polymeric reaction injected molded polyurethane components which have been previously mixed together with an aftermixer device, or polyvinyl chloride materials) is injected into suitable mould cavities to form the gaskets (or casings) 14, 16 and 18 on the transparent glass sheet 12 which is simultaneously held within the mould half. The channels or runners include a main runner 22 which is a bifurcated channel leading from a common aftermixer, a channel 21, and fan-shaped exit portions 24a, 24b adapted to introduce the mould material into the cavity to form the gasket portion 14 from either end of the cavity. Alternatively, only one exit portion (such as portion 24a) need be used to fill the cavity from that single exit. Also, additional exits could be included at other points in the cavity. Bracket 20 is not included in the mould half or mould assembly at the time gasket portion 14 is formed. The cavity forming gasket 14 forms a connection chamber leading to secondary mould channels or runners 26, 28 which lead to gaskets 16, 18 respectively. Runners or channels 26, 28 are spaced away from the edge of the sheet 12 to avoid applying extraneous moulding material to the sheet while efficiently directing moulding material to the cavities forming gaskets 16, 18 which wrap around the lower corners of the transparent sheet 12. Thus, the overall weight of the assembly is kept at a minimum by reducing the necessary amount of gasket material on the edges of the sheet.

Prior to injecting the polymeric material through runners 21, 22, 24a, 24b, 26 and 28, the sheet 12 of transparent material, preferably glass, is placed within a recess in the lower mould half A such that the edges of the sheet project into mould cavities adapted to form the gaskets 14, 16 and 18. The sheet 12 is preferably coated on the edges which will receive cavities with a suitable, conventionally known primer which enhances the adherence or bonding between the polymeric material and the glass surfaces during moulding. Thereafter, the desired polymeric material is injected through the runners or channels 21, 22, 24, 26 and 28 such that the mould cavities are filled to form gasket portions 14, 16 and 18. As will be seen from Figures 8A and 8B, the lower part of gasket portion 16 has a section which envelopes and encapsulates the upper end of glass edge 13 while a similar but slightly thicker section is provided in the connecting portion 42b of gasket 14. After the polymeric material cures and/or sets, the partially formed window assembly including gasket portions 14, 16 and 18 adhered and bonded to the appropriate edges, is removed from the mould once the top half of the mould apparatus has been withdrawn. As is conventionally known in the moulding art, appropriate seals may be included in the upper and lower mould halves to close off the mould cavities to prevent the escape of moulding material during the moulding process.

Although the use of plastic or polymeric moulding material, such as reaction injection moulded polyurethane, is preferred, polyvinyl chloride could alternatively be used for the gasket portions if made sufficiently rigid to prevent pulling off the bracket therefrom, and such that gaskets 16 and 18, which slide in guide tracks T, are also sufficiently rigid. A suitable primer to be applied to the glass sheet 12 before moulding of the gasket portions from reaction injection moulded polyurethane may be obtained from Lord Corporation of Erie, Pennsylvania under the product designation Chemlock AP-134. In addition, it is possible that other polymeric materials may be used to form the gasket portions and that other transparent sheeting such as acrylic or other plastic materials may be used instead of glass depending on the desired window application. Of course, glass coated with an opaque or translucent frit layer or other opaque or translucent sheet materials may be substituted for the transparent glass or plastic sheeting of assembly 10 to produce other panel assemblies within the scope of this invention.

Referring now to Figures 3 to 8A and 8B, elongate gasket portion 14 is adapted to receive bracket 20 (or 20a, 20b or 20c in Figures 5A to 5D) slidably thereover in the window panel assembly 10 as shown. Gasket 14 is an elongated member extending along a portion of the bottom edge of sheet 12 from the slanted edge 13 to a position near, but spaced from, the forward edge of the window 12 over which gasket 18 is applied. As shown in Figures 1 to 3, gasket 14 is spaced and separated from gaskets 16 and 18 along the window edge. Gasket 14 includes a slanted edge 30 in parallel with glass edge 13 over which the bracket 20 is adapted to be slid during assembly. The gasket envelopes and encapsulates the edge of glass sheet 12 on the area in which it is formed and includes two opposing thin layers 32 spaced upwardly from the lower edge of the sheet glass 12, a wedge-shaped retaining portion 34 adjacent the lower edge of the glass sheet on the outer side of the glass, and a bottom portion 36 joining the longer thin section 32 on the inside surface of the glass and wedge-shaped portion 34. Wedge-shaped portion 34 on the outer glass surface is adapted to mate and engage with the inside surface of a tapered chamber 50 forming a channel portion in bracket 20 (or 20a, 20b or 20c) as will be explained. The wedge-shaped portion 34 may be smooth-sided, as shown in Figures 9 and 10. However, the gasket 14 may include a pair of spaced, longitudinally extending ribs 38, 40, each of which has a semi-cylindrical section and outer surface adapted to engage the inside surface of the bracket 20. The rib 38 can be slightly thinner than rib 40, although the two ribs together are adapted to provide sufficient contact surface to retain bracket 20 thereover while resulting in less resistance to sliding assembly of the bracket 20 onto the gasket than the smooth-sided embodiment in Figures 9 and 10. The thin portions 32 provide a necked-down (or narrowed neck portion) gasket area adapted to extend through an opening 68 in the bracket 20, as will be further explained.

Spaced outside the bracket and above thin portions 32 are thickened (gasket) portions 42. The thick portions 42 extend along both sides of the glass sheet 12 above the area in which bracket 20 is slidably mounted and are angled downwardly towards a lower edge of the glass 12 at area 42a to provide a connection section 42b at one end of the bracket 20. As shown in Figure 2, connection section 42b extends sufficiently far toward the forward edge of sheet 12 to provide a connection between the fan-shaped opening 24b of runner/channel 22 in the mould apparatus and runner 28 which extends to the cavity forming gasket 18. Thickened portions 42 are provided for better adhesion of gasket 14 to the sheet glass surfaces by providing a better curing heat for the primer thereby producing better overall adhesion strength for the gasket to the glass after moulding.

As is best shown in Figures 3, 4, 6 and 7, the outer surface of gasket bottom 36 includes a pair of spaced flexible, compressible, resilient locating and retaining projections 44, 46 each of which has a flat abutment surface 48, 49, respectively, for engaging an end edge surface of bracket 20. Projection 44 has an inclined lead-in surface 45 which allows the bracket end edge to pass easily over and past projection 44. The projection is sufficiently resilient to flex and/or compress to allow such passage. Once the bracket is moved past projection 44, the leading end edge of the bracket engages abutment surface 49 on projection 46 to locate the bracket along gasket 14. At the same time, the trailing end edge of bracket 20 has completely passed over projection 44 such that it is immediately adjacent abutment surface 48 to resist removal of the bracket. Accordingly, projections 44, 46 locate and position the bracket 20 along gasket 14 during and after assembly and resist withdrawal of the bracket from the gasket in either direction along the length of the gasket.

As shown in Figures 1 to 3 and 5, bracket 20 is preferably formed from two bent pieces of thin gauge, sheet steel including an L-shaped piece 52 and a channel-shaped piece 54. L-shaped piece 52 includes an inwardly inclined sidewall 56, bottom wall 58, and an L-shaped flange 60 adapted to support the channel-shaped portion 54. The channel-shaped portion 54 includes parallel top and bottom walls 62, 64, respectively, and sidewall 66. Pieces 52 and 54 are preferably spot welded together between sidewall 66 and L-shaped flange 60 at several places. When thus assembled, sidewall 66 and inwardly angled sidewall 56, together with bottom wall 58, form a wedge-shaped hollow chamber or channel 50 having openings at either end and an elongated opening 68 which is narrower than the width of bottom wall 58 and provides an opening through which the sheet glass 12 and its gasket 14 extend out of the bracket. Likewise, channel portion 54 is sized to receive rollers or wheels W from a window regulator (movement) mechanism such as a scissor-type linkage M as shown in Figure 5. The inturned flanges 63, 65 on the top and bottom 62, 64 of the channel portion as well as upturned flanges at the ends of the bracket (not shown) prevent the rollers or wheel from escaping after insertion.

When the bracket 20 is slidably mounted over the gasket 14 and the periphery of the sheet glass 12, ribs 38, 40 engage the inside surface of wall 56 and, due to the wedge shape of the retaining area on the gasket 14, prevent the bracket 20 from being pulled downwardly off the window panel assembly. Locating projections 44, 46 prevent longitudinal sliding movement of the bracket by engaging the end edge surfaces of the bracket after assembly as described above. Once assembled, however, the bracket is securely retained in position and prevented from rattling by engagement of the bracket with the polymeric gasket and is prevented from being pulled downwardly off the assembly by the wedge-shaped portion of the gasket.

To facilitate retention of the brackets on gasket 14, alternative bracket forms 20a, 20b and 20c are shown in Figures 5A, 5B and 5C, respectively, and is also in section in Figure 5D. Each of the modified brackets is substantially similar to bracket 20 except that the inwardly angled sidewall 56 of L-shaped piece 52 has been changed to include one of several types of recesses or depressions which engage gasket 14 between the ribs 38, 40 to positively hold and lock the bracket onto the gasket 14. Thus, as shown in Figures 5A and 5D, bracket 20a includes an elongated recess or depression 57a in sidewall 56a extending the full length of sidewall 56a. Alternatively, as shown in Figures 5B and 5D, sidewall 56b may include spaced or segmented recesses or depressions 57b, each of which is slightly elongated but spaced from one another along the length of the bracket sidewall. As shown in Figures 5C and 5D, instead of the elongated depressions or recesses, spherical depressions 57c may be provided in sidewall 56c. Each of the recesses or depressions 57a, 57b and 57c has a rounded undersurface as shown in Figure 5D helping to allow the channel to be slid over gasket 14 but allowing the recesses or depressions to fit between ribs 38, 40 and engage the surface of wedge-shaped portion 34. Thus, should a downward pressure be exerted on the bracket with respect to sheet 12 and gasket 14, recesses or depressions 57a, 57b or 57c would resist removal of the bracket from the gasket by engagement of those recesses or depressions with the lowermost rib 40.

As shown in Figures 9 to 19, where like numerals indicate like parts to those in gasket 14, numerous other configurations for the retaining portion of the gasket over which the bracket 20 is adapted to be slidably fitted may be provided in the window assembly. A second form 70 is shown, for example, in Figures 9 and 10. In gasket 70, instead of a pair of spaced ribs along the wedge-shaped retaining gasket portion, a smooth, planar, inclined surface 72 is provided angling from the bottom surface 36 to the surface of the thinner portion 32 on the outer side of the assembly. When bracket 20 is slid thereover, the entire surface 72 engages the inside surface of the bracket wall 56 while projections 44, 46 locate and lock it in position along the length of the gasket.

As shown in Figures 11 to 13, a third embodiment 80 of the gasket is modified to include a series of generally spherical projections 84 having rounded, outwardly served surfaces 86 thereon extending from inclined surface 82 on the outer side of the gasket. Projections 84 are aligned vertically in pairs, which pairs are spaced from one another along the entire length of the bracket receiving portion of the gasket 80 as is best seen in Figure 11. Any of brackets 20, 20a or 20b are adapted to be slid over gasket 80 from the inclined end edge 30, the left-hand side of Figure 11. The bracket slides over the rounded outer surfaces 86 of projections 84 until it is located and positioned by projections 44, 46 as described above. The wedge shape of the retaining portion on gasket 80, together with projections 84, prevent brackets 20, 20a, 20b or 20c from being pulled therefrom. In the case of brackets 20a or 20b, recesses or depressions 57a, 57b engage between the rows of projections 84 to help resist removal. Depressions 57b are preferably spaced in alignment with projections 84.

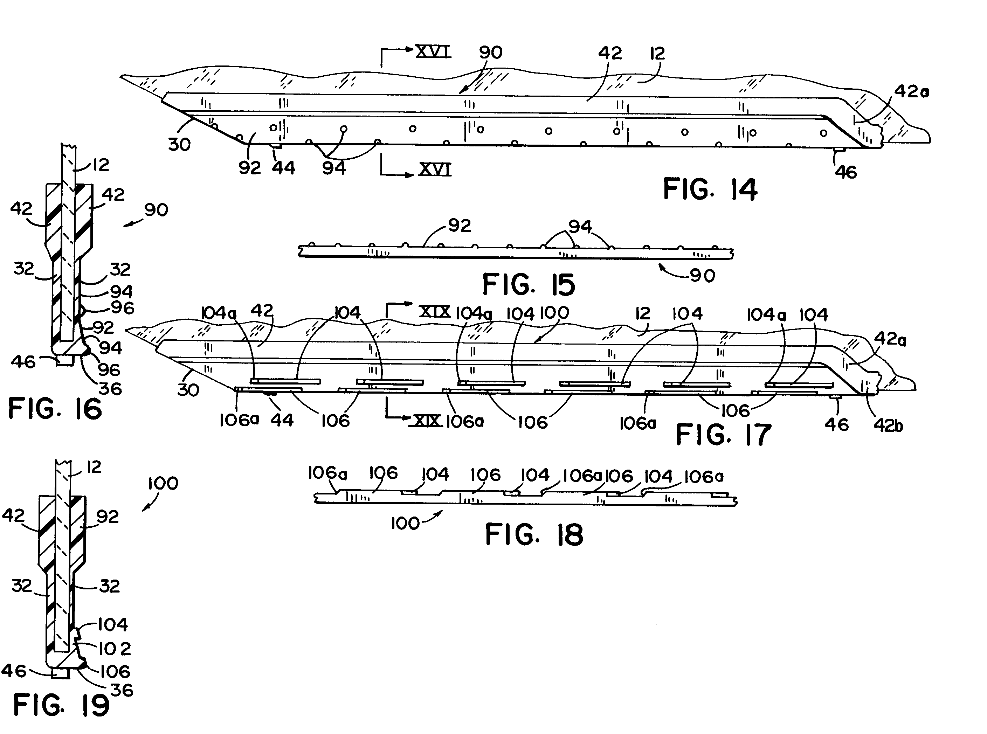

A fourth embodiment of the assembly including gasket 90 is shown in Figures 14 to 16 including spherical projections 94 which are positioned in an alternating, staggered array along the inclined side surface 92 of wedge-shaped retaining portion on the gasket 90. Each projection 94 has a rounded, outwardly curved surface 96 similar to those on projections 84 in gasket 80, which surfaces are adapted to engage the inside surface of bracket wall 56 for retention of the bracket. As in the other embodiments, locating projections 44, 46 are also included. Gasket 90 may be used with any of brackets 20, 20a or 20b.

As with gasket 80, depressions 57a or 57b engage between the rows of projections 94 and resist removal of the bracket. Preferably, depressions 57b are aligned with the lower row of projections 94 for best retention.

A fifth form 100 of the gasket is shown in Figures 17 to 19. Gasket 100 includes a series of segmented longitudinally aligned and vertically staggered rib segments 104, 106 formed along the planar, inclined side surface 102 of the wedge-shaped retaining portion of gasket 100. Each of the rib segments 104, 106 includes a generally planar outer surface best seen in Figures 19. These outer surfaces are generally parallel to retaining portion angled surface 102. In addition, each rib segment includes an inclined end surface 104a, 106a at the left end of each segment over which any of brackets 20, 20a, 20b or 20c is adapted to be slid upon assembly. As with the other gaskets, locating, positioning projections 44, 46 are also included. Gasket 100 allows brackets 20, 20a, 20b or 20c to be slid thereover from the angled edge 30 such that the outer surfaces of rib segments 104, 106 engage the inside surface of sidewall 56 with depressions 57a, 57b or 57c engaging between rib segments 104, 106 after assembly to retain the bracket on the window. Preferably, depressions 57b, 57c are aligned with rib segments 106 for best retention.

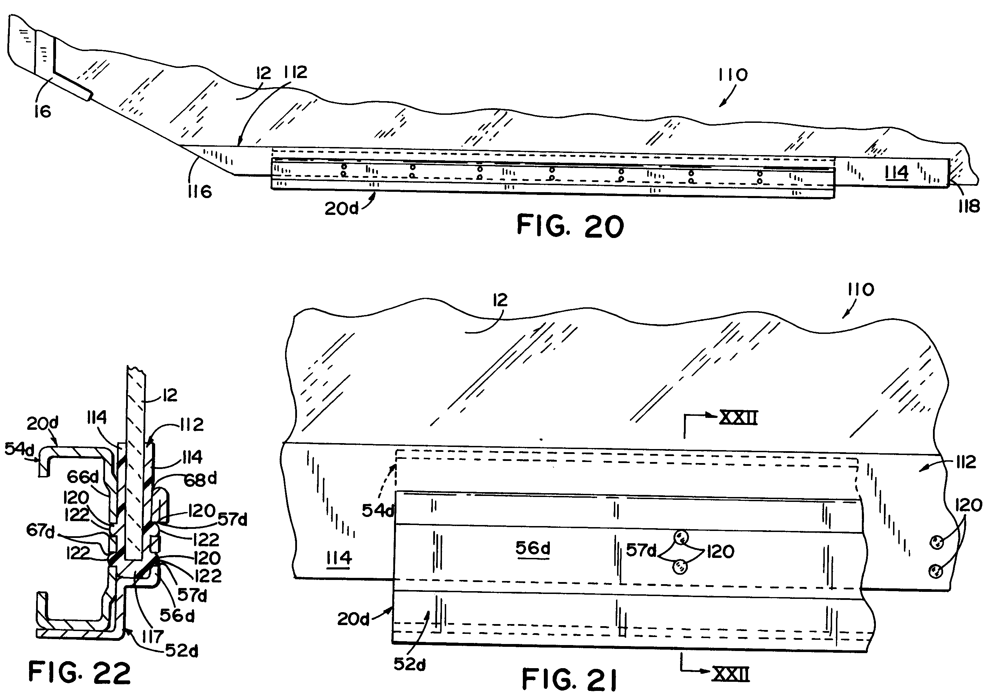

A sixth form of the window assembly 110 is shown in Figures 20 to 22 where like parts are indicated by like numerals and includes a modified gasket 112, a modified bracket 20d, and a modified assembly method by which the bracket is slidably mounted over the gasket 112. In embodiment 110, gasket 112 is in simplified form and includes an elongated body portion 114 extending along either side of the lower glass sheet edge from an upwardly angled portion 116 to an end surface 118. Body portions 114 are of substantially uniform thickness on either side of sheet 12 and somewhat thicker than the thin sections 32 described above for gaskets 14, 70, 80, 90 and 100. Instead of a lower wedge-shaped retaining portion, gasket 112 includes a series of outwardly extending, generally cylindrical projections 120 having rounded, outwardly curved surfaces 122. Projections 120 are vertically aligned in pairs, which pairs are spaced from one another along the length of the gasket over which bracket 20d is adapted to be mounted. Projections 120 extend generally perpendicularly from body portions 114 and the side surfaces of glass sheet 12 as shown in Figure 22.

Modified bracket 20d is adapted to fit over gasket 112 from the bottom and includes modified L-shaped and channel members 52d and 54d. L-shaped member 52d includes a sidewall 56d which extends substantially parallel to sidewall 66d of channel portion 54d. Sidewalls 56d, 66d each include aligned pairs of circular apertures 57d, 67d which are adapted to receive projections 120 when the bracket is slid over gasket 112. When so received, the projections 120 retain bracket 20d on the gasket 112 and resist its removal both longitudinally and vertically off the bottom edge of the assembly.

In order to assemble bracket 20d on gasket 112, the elongated opening 68d between sidewalls 56d, 66d is aligned with the bottom 117 of gasket 112 such that apertures 57d, 67d are in alignment with projections 120 on either side of the gasket. The bracket is then press-fitted upwardly over the thickness of the glass sheet and gasket. The projections 120 are resilient, flexible and compressible and slide over the inside surfaces of the sidewalls via their rounded outer surfaces until they are seated within apertures 57d, 67d. In addition, bracket 20d has some resiliency which allows sidewall 56d to spring slightly outwardly during such assembly to receive projections 120 through opening 68d after which the sidewall returns to its original position. Thereafter, the strength of the projections resist withdrawal of the bracket from the assembly. In this case, locating, positioning projections 44, 46 are unnecessary because of the retaining and positioning functions of the projections 120 in the bracket apertures.

As mentioned above, each of the gaskets 14, 70, 80, 90, 1000 and 112 is preferably formed from a polymeric moulded material such as polyvinyl chloride or reaction injection moulded polyurethane. Although not believed necessary, adhesives or primers may be used between the brackets 20, 20a, 20b, 20c or 20d and the gasket portions, the former typically made from formed or bent steel sheeting. Also, other types of brackets may be used for receipt of other window regulator or movement mechanisms besides the scissor-type raising and lowering mechanism M shown herein. Further, other configurations of retaining portions on the gaskets and the depressions in the brackets may be devised within the scope of this invention. In addition, non-transparent sheets or panels may be used to allow formation of panel assemblies for uses other than as windows, such as decorative panel assemblies in vehicles, buildings or the like.

## Claims

1. A panel assembly comprising:
   a panel;
   a peripheral gasket extending along at least a portion of one edge of the panel;
   a bracket mounted on the gasket, the bracket having receiving means for receiving at least a portion of the gasket and at least a portion of one edge of the panel;
   the gasket and bracket having means for slidably mounting the receiving means on the gasket after the gasket has been attached to the panel;

the gasket having retaining means which engage with the receiving means to secure the bracket on the gasket and thus to the panel.

2. A panel assembly according to claim 1 wherein the receiving means comprises an interior chamber for receiving at least a portion of the gasket, there being an elongate opening to the chamber through which the gasket and panel extend, the elongate opening being narrower than at least a portion of the chamber whereby the gasket is prevented from passing through the opening to resist removal of the bracket from the panel.

3. A panel assembly according to claim 2 wherein the means for slidably mounting the receiving means additionally includes an opening at one end of the receiving means and communicating with the chamber, the chamber being defined by a pair of sidewalls, and a bottom wall opposite the elongate opening, at least one of the sidewalls sloping inwardly towards the elongate opening from the bottom wall.

4. A panel assembly according to any of claims 1 to 3 wherein the retaining means comprises an elongate, wedge-shaped gasket portion.

5. A panel assembly according to claim 4 wherein the retaining means comprises at least one rib extending along the wedge-shaped gasket portion which engages with the receiving means.

6. A panel assembly according to claim 5 wherein the bracket is provided with a depression adapted to engage a rib to assist retention of the bracket on the gasket.

7. A panel assembly according to any of claims 1 to 6 wherein the retaining means additionally include projecting means on the gasket for engaging an edge of the receiving means to resist or prevent sliding removal of the bracket.

8. A panel assembly according to claim 7 wherein the projecting means comprises a flexible detent adapted to flex and/or compress when the receiving means is slid thereover, and to return to its original position after passage of the receiving means, the detent including an inclined lead-in surface to facilitate mounting of the receiving means onto the gasket.

9. A panel assembly according to any of claims 1 to 8 wherein the retaining means include a plurality of spaced apart projections, such as having a rounded, outwardly curved surface to facilitate slidable mounting of said receiving means thereover, extending outwardly from said wedge-shaped gasket portion and engaging said receiving means.

10. A panel assembly comprising:

a panel;

a peripheral gasket extending along at least a portion of one edge of the panel;

a bracket mounted on the gasket, the bracket having receiving means for receiving at least a portion of the gasket and at least a portion of one edge of the panel;

the gasket having a thickened portion adhered to the panel outside of the receiving means to facilitate retention of the gasket on the one edge of the panel.

11. A method of manufacturing a panel assembly, the method comprising:

providing a panel;

attaching a gasket to at least a portion of one edge of the panel; and

sliding a bracket over the gasket until retaining means on the gasket engage with receiving means on the bracket to secure the bracket to the gasket.

12. A method as claimed in Claim 11 wherein the panel assembly is as claimed in any of Claims 1 to 9.

FIG. 1

FIG. 2

FIG. 3

FIG. 4

FIG. 5

FIG. 6

FIG. 7

FIG. 8A

FIG. 8B

FIG. 9

FIG. 10

FIG. 11

FIG. 12

FIG. 13

FIG. 5D

FIG. 5A

FIG. 5B

FIG. 5C

EP 0 467 645 A1

FIG. 14

FIG. 15

FIG. 16

FIG. 17

FIG. 18

FIG. 19

EP 0 467 645 A1

FIG. 20

FIG. 22

FIG. 21

European Patent Office

## EUROPEAN SEARCH REPORT

Application Number

| | DOCUMENTS CONSIDERED TO BE RELEVANT | | EP 91306440.8 |
|---|---|---|---|

| Category | Citation of document with indication, where appropriate, of relevant passages | Relevant to claim | CLASSIFICATION OF THE APPLICATION (Int. Cl.5) |
|---|---|---|---|
| D,A | US - A - 4 662 113 (WEAVER) * Fig. 1,2,4 * | 1-3, 10,11 | B 60 J 1/17 |
| D,A | US - A - 4 561 211 (RALEY, WARREN) * Totality * | 1,11 | |
| A | EP - A2/A3 - 0 173 091 (BAYERISCHE MOTORENWERKE AKTIENGESELLSCHAFT) * Fig. 3; claims 9-11 * | 1-6, 10,11 | |
| A | GB - A - 2 052 614 (DAIMLER-BENZ AKTIENGESELL-SCHAFT) * Fig. 1,2 * | 1-4, 10,11 | |

TECHNICAL FIELDS SEARCHED (Int. Cl.5)

B 60 J
E 05 F
E 06 B

The present search report has been drawn up for all claims

| Place of search | Date of completion of the search | Examiner |
|---|---|---|
| VIENNA | 23-10-1991 | SCHMICKL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)